# FASCICULE DE BREVET EUROPEEN

(11) **EP 0 718 667 B1**
(45) Date de publication et mention de la délivrance du brevet: **24.08.2011**
(21) Numéro de dépôt: 95402925.2
(22) Date de dépôt: 22.12.1995
(51) Int. Cl.: G02F 1/163

(54) **Procédé d'alimentation électrique de deux vitrages électrochromes**
Elektronisches Versorgungsverfahren für zwei elektrochrome Verglasungen
Electronic supply method for two electrochrome windows

(30) Priorité: 23.12.1994 FR 9415565
(43) Date de publication de la demande: 26.06.1996
(73) Titulaire: SAINT-GOBAIN GLASS FRANCE, 92400 Courbevoie (FR)
(72) Inventeur: Lefrou, Christine, F-94200 Ivry sur Seine (FR); Perrin, Didier, F-75015 Paris (FR)
(74) Mandataire: Breton, Jean-Claude

(56) Documents cités:
- EP-A- 0 568 457
- EP-A- 0 679 924
- DE-A- 3 032 680
- US-A- 4 298 870
- PATENT ABSTRACTS OF JAPAN vol. 14 no. 516 (P-1130) & JP-A-02 216131 (NIKON ) 29 Août 1990,
- PATENT ABSTRACTS OF JAPAN vol. 15 no. 214 (P-1209) & JP-A-03 059545 (NISSAN) 14 Mars 1991,
- PATENT ABSTRACTS OF JAPAN vol. 15 no. 116 (P-1182) & JP-A-03 006534 (HITACHI) 14 Janvier 1991,
- PATENT ABSTRACTS OF JAPAN vol. 18 no. 387 (P-1773) & JP-A-06 110087 (DAICHI) 22 Avril 1994,
- PATENT ABSTRACTS OF JAPAN vol. 12 no. 456 (P-793) & JP-A-63 179334 (HITACHI) 23 Juillet 1988,

## Description

La présente invention est relative aux systèmes électrocommandables à coloration variable du type électrochrome. Elle concerne plus particulièrement les vitrages électrochromes et notamment leur procédé d'alimentation électrique.

Les vitrages électrochromes sont en effet des vitrages à transmission énergétique et/ou lumineuse électrocommandée, autrement dit des vitrages dont on peut modifier la transmission dans certaines longueurs d'onde du rayonnement électromagnétique, notamment dans l'infrarouge et/ou dans le visible sous l'effet d'une alimentation électrique.

De tels vitrages sont particulièrement intéressants pour équiper bâtiments ou véhicules afin de contrôler l'apport solaire à l'intérieur des pièces ou habitacles. On peut aussi s'en servir pour constituer des cloisons internes dans des bâtiments ou même les associer à des miroirs du type rétroviseurs pour éviter les phénomènes d'éblouissement.

Les systèmes électrochromes entrant dans le cadre de la présente invention sont tous les systèmes basés sur une réaction électrochimique impliquant le passage d'un courant électrique qui doit être fourni au système au moins pour un des sens de la réaction ou le plus souvent dans les deux sens de réaction.

Certains de ces systèmes sont des systèmes basés sur l'insertion réversible de cations dans des oxydes métalliques. Par la suite, et pour plus de clarté, il sera fait essentiellement référence à de tels systèmes pour évoquer les difficultés qui se présentent mais l'invention ne doit pas pour autant être considérée comme limitée à ce type de systèmes électrochromes. En outre, l'invention s'applique aussi bien à des systèmes électrochromes utilisés comme vitrages qu'à des systèmes utilisés comme batteries.

Leur principe de fonctionnement est le suivant. Ils comportent une couche d'un matériau à propriété électrochrome, qui est capable d'insérer de manière réversible des cations, notamment des protons H⁺ ou des cations d'un métal alcalin comme le lithium Li⁺, et de ce fait passer d'un degré d'oxydation à un autre, chacun des degrés d'oxydation correspondant à un état de coloration différent.

Ainsi, le trioxyde de tungstène, pratiquement incolore dans son état oxydé (a), est d'une coloration bleu-nuit soutenue dans son état réduit (b) obtenu en insérant des cations M⁺ selon la réaction suivante :

WO₃ (a) + x M⁺ + x e⁻ ↔ MₓWO₃ (b) ou M⁺ = Li⁺ , H⁺

La réaction d'insertion suppose une source de cations et une source d'électrons. D'autre part, dans un système complet, l'obtention d'une bonne réversibilité, du moins pour un grand nombre de cycles d'insertion/désinsertion, est subordonné à la présence d'une contre-électrode, capable elle aussi d'insérer et de désinsérer des cations de façon réversible et complémentaire par rapport à l'électrode principale.

C'est la raison pour laquelle les vitrages électrochromes sont usuellement constitués par deux substrats, usuellement en verre, entre lesquels on dispose deux couches électroconductrices transparentes munies d'amenées de courant, couches séparées successivement par une électrode constituée d'un matériau électrochrome cathodique tel que WO₃, un électrolyte apte à assurer un transfert de cations et enfin une contre-électrode insérant ou désinsérant les cations symétriquement par rapport à l'électrode. De préférence, la contre-électrode est également en un matériau électrochrome, un matériau électrochrome anodique comme l'oxyde d'iridium ou l'oxyde de nickel étant associé à un matériau électrochrome cathodique comme le WO₃. Un tel matériau électrochrome anodique est incolore à l'état réduit (ou état inséré) et coloré à l'état oxydé (ou désinséré). De ce fait, il permet de renforcer le contraste de coloration du vitrage.

Un fonctionnement idéal d'un vitrage électrochrome consisterait à permettre à l'utilisateur, par commande électrique, de faire passer le vitrage à volonté d'un degré de coloration à un autre dans une gamme de transmission lumineuse donnée et/ou dans une gamme de transmission énergetique donnée, de façon reproductible, avec des temps de commutation (c'est-à-dire de modification de coloration) raisonnables, quelles que soient les conditions d'utilisation du vitrage et quelle que soit sa taille.

Or c'est un objectif qui n'est pas aisé à atteindre, dans la mesure où interviennent en fait beaucoup de paramètres et de contraintes liés aux matériaux constitutifs mêmes des vitrages électrochromes, d'où tous les efforts actuellement menés pour mettre au point des systèmes d'alimentation électrique adaptés.

Ainsi, le brevet EP-408 427 a proposé un système d'alimentation utilisant un générateur de tension du type potentiostat et un montage à 3 électrodes qui permet d'augmenter sensiblement les vitesses de commutation des vitrages électrochromes sans cependant risquer de leur imposer des tensions susceptibles de provoquer en leur sein des réactions parasites préjudiciables pouvant par exemple conduire à la formation de bulles par dégagement gazeux.

Le brevet EP-475 847 propose en outre d'ajuster les profils de tension appliqués aux vitrages en fonction de leur température, dans la mesure où leur « réponse » électrochimique sous l'application d'un champ électrique dépend assez étroitement de ce paramètre, du fait notamment des variations de conductivité de l'électrolyte disposé entre les deux couches de matériaux électrochromes et assurant le transfert de cations de l'une à l'autre.

Le système d'alimentation prévu dans le brevet européen EP-0 568 457 consiste à déterminer la « charge » du vitrage électrochrome à un moment donné ainsi que la charge qu'il faut lui apporter pour obtenir la modification de coloration voulue, et ceci en fonction du potentiel à l'abandon du vitrage et d'un potentiel de consigne.

Enfin, la demande de brevet EP-683 419 choisit d'alimenter les vitrages électrochromes non plus avec un générateur de tension, mais avec un générateur d'intensité, apte à délivrer des intensités déterminées en fonction du nombre de charges à transférer pour obtenir le changement de coloration voulu et en fonction du temps de commutation choisi. Un tel système permet d'affranchir dans une certaine mesure la commande électrique des fluctuations du comportement des vitrages électrochromes, notamment lorsque leur température d'utilisation varie.

Cependant, il existe toujours le besoin d'une commande électrique pour vitrages électrochromes qui puisse répondre de manière plus globale à toutes les contraintes de fonctionnement de ce type de vitrages, quelques soient leurs caractéristiques intrinsèques ou leurs conditions d'utilisation.

Le but de l'invention est alors l'optimisation d'un système de commande pour vitrages électrochromes qui puisse s'adapter à tout type de vitrage et tout type de condition d'utilisation, et qui parvienne, notamment, à concilier au mieux fiabilité, performances et longévité du vitrage d'une part, simplicité de fonctionnement pour l'utilisateur d'autre part.

L'invention a pour objet un procédé d'alimentation électrique selon la revendication 1.

La structure électrochrome (ou « l'empilement électrochrome ») est la structure du type de celle décrite dans les brevets précités et comprenant au moins une couche constituée d'un matériau électrochrome, cette structure

< EP-A-679 92, un document visé à l'article 54(3) CBE, propose un autre procédé d'alimentation électrique d'un vitrage électrochrome comportant des éléments de l'objet revendiqué, mais ce document ne contient pas d'informations concernant l'alimentation d'au moins deux vitrages électrochrome comme cela est précisé dans les revendications 1 et 23. > étant habituellement délimitée par deux couches électroconductrices munies de leurs amenées de courant. Le moyen de mesure de la tension électrique dont il est fait mention dans le procédé de l'invention mesure la tension entre deux « points » (ou zones) distincts de cette structure, chaque point étant choisi, par exemple, sur l'une des deux couches électroconductrices extrêmes délimitant la structure électrochrome (ou sur l'amenée de courant qui lui est adjointe, par exemple une bande d'émail sérigraphiée) ou entre ces deux couches.

Généralement, le moyen de mesure mentionné au paragraphe précédent détermine la tension aux bornes du (d'au moins un des) vitrage(s) (c'est-à-dire entre deux points des couches électroconductrices extrêmes de l'empilement électrochrome et/ou de leurs amenées de courant, la perte ohmique dans les moyens de connexion électrique reliés auxdites couches étant dans ce cas relativement négligeable), comme illustré notamment dans les exemples ultérieurs de réalisation de l'invention. Les points entre lesquels sont faites les mesures de tension peuvent être « diamétralement » opposés, ou peuvent se faire face sur le modèle par exemple du brevet EP-408 427, etc... . A titre illustratif (mais non limitatif), la mesure peut aussi se faire entre un point d'une des couches électroconductrices extrêmes de la structure électrochrome (ou de l'amenée de courant qui lui est adjointe) et un point quelconque situé entre les deux couches électroconductrices extrêmes et distinct de ces couches, ce point correspondant, par exemple, à une électrode de référence ou de pseudo-référence, etc....

Il est également possible d'utiliser un ou plusieurs moyens de mesure pour mesurer plusieurs tensions entre différents points du vitrage (par exemple pour mesurer une tension entre un point d'une des couches électroconductrices extrêmes de la structure électrochrome et un point situé entre les deux couches électroconductrices extrêmes et pour mesurer une autre tension entre ce dernier point et un point de l'autre couche électroconductrice extrême).

Dans la suite du texte, pour plus de simplicité, il n'est fait référence qu'à une tension mesurée entre deux points distincts de la structure électrochrome mais l'enseignement donné pour cette tension s'applique également à une tension ou à au moins une tension ou à chaque tension dans le cas où l'on mesure plusieurs tensions, ce cas faisant également partie de l'invention.

Le procédé de l'invention met en oeuvre un circuit du type précédemment décrit en prévoyant un certain nombre d'étapes, dont les étapes suivantes :
- on effectue une initialisation de l'unité de contrôle par les données de fonctionnement caractéristiques du (des) vitrage(s) et du circuit, dont les deux limites de la gamme d'états de coloration possibles. Cette étape est importante, dans la mesure où elle consiste à « informer » au départ l'unité de contrôle de tous les paramètres susceptibles d'influer sur sa consigne d'alimentation. Il peut s'agir notamment de la prise en compte de la nature de matériaux électrochromes ou de l'électrolyte choisis, de la dimension du vitrage en question, des plages de fonctionnement en tension, et/ou des déperditions ohmiques dues au système de câblage adopté dans le circuit électrique. Une donnée essentielle reste cependant, comme précédemment mentionné, la détermination de la gamme de coloration possible selon le vitrage, les deux limites de cette gamme permettant de définir son contraste maximum. Il peut aussi être important d'informer l'unité de contrôle de « l'état de coloration » dans lequel se trouve le vitrage au moment de sa connexion au circuit de commande électrique. Cette étape consiste donc en des pré-réglages qui sont du domaine d'un opérateur spécialisé,
- une fois les vitrages connectés et le circuit électrique en conditions de fonctionnement normal, l'utilisateur peut alors, à l'aide de l'interface-utilisateur de l'unité de contrôle, actionner une commande de modification d'état de coloration, donc soit une commande de coloration, soit une commande de décoloration, quel que soit l'état de coloration du vitrage au moment de la commande,
- l'unité de contrôle enregistre alors la commande et déclenche une consigne d'alimentation au générateur pour une réponse adaptée. Cette consigne dépend à la fois des données de fonctionnement avec lesquelles l'unité de contrôle a été initialisée et des mesures des caractéristiques physiques du circuit et/ou du vitrage, dont la mesure effective de «l'état de coloration » du vitrage lors de l'actionnement de la commande ou la lecture de cet « état de coloration » mémorisé par l'unité de contrôle, notamment à la fin de la consigne d'alimentation déclenchée par la commande de modification de coloration précédente,

- tant que le générateur délivre de l'électricité sous consigne de l'unité de contrôle, celle-ci « suit » la modification de l'état de coloration du vitrage, par le moyen de mesure adapté. Pour garantir le bon déroulement de la commutation du vitrage, l'unité de contrôle vérifie, à une fréquence donnée, le respect d'un certain nombre de critères de sécurité, à partir des données de fonctionnement avec lesquelles elle a été initialisée qu'elle compare à la (ou les) caractéristique(s) physique(s) fournie(s) par le ou les moyens de mesure et de calcul du circuit. Ces critères seront détaillés par la suite. C'est dans une large mesure par ces vérifications systématiques que l'on s'assure de la fiabilité, et surtout de la longévité du vitrage électrochrome. (De préférence, l'unité de contrôle vérifie ces critères au moins une fois après enregistrement d'une commande, avant même de déclencher une consigne d'alimentation, afin de bloquer le processus d'alimentation en électricité dès le départ en cas de non-respect),
- l'unité de contrôle modifie en effet sa consigne d'alimentation et/ou avertit l'utilisateur en cas de non-respect d'au moins un de ces critères de sécurité, afin d'éviter de placer le(s) vitrage(s) dans un état dégradant, par exemple en cas de dysfonctionnement propre au vitrage ou aux éléments du circuit (du type déconnexion accidentelle) ou en cas d'événements extérieurs du type conditions climatiques extrêmes,
- le procédé prévoit également un arrêt de la consigne d'alimentation de l'unité de contrôle au générateur, provoqué par deux situations : soit il s'agit d'une interruption volontaire de la commande de modification de coloration au niveau de l'interface utilisateur par l'utilisateur, pour « arrêter » le vitrage dans un état de coloration intermédiaire ; soit l'unité de contrôle , en « suivant » l'état de coloration du vitrage, détermine que l'objectif de coloration fixé par la commande est atteint. L'unité de contrôle se remet alors, dans les deux cas, en situation d'attente de commande.

Ainsi, en fonctionnement normal, entre deux phases de commutation commandées par l'utilisateur (ou de manière automatisée, comme on le verra par la suite), l'unité de contrôle coupe de préférence toute alimentation en électricité par le générateur, ne serait-ce que dans un souci d'économie d'énergie, puisque les vitrages électrochromes présentent la propriété de pouvoir garder leur état de coloration pendant longtemps sans alimentation.

Avantageusement, la modification précédemment évoquée de la consigne d'alimentation en cas de non-respect de l'un des critères de sécurité peut simplement consister en ce que l'unité de contrôle actionne l'ouverture immédiate du circuit électrique. Reste ensuite à prévoir une remise en position d'attente normale de l'unité de contrôle, soit par ré-enclenchement automatique au bout d'une période déterminée initialisée au départ à l'aide du moyen de décompte du temps, soit par ré-enclenchement manuel par un opérateur.

En fonctionnement normal, quand les critères de sécurité sont respectés, l'arrêt de la consigne d'alimentation par l'unité de contrôle pour atteindre l'objectif de coloration fixé à la commande peut s'opérer en imposant notamment deux conditions, de préférence alternatives :
- l'une consiste à mesurer l'intensité circulant dans le circuit, par exemple aux bornes du (des) vitrages ou du générateur, et à arrêter la consigne dès qu'elle atteint une valeur minimale initialisée, valeur que l'on peut choisir par exemple entre 0,1 et 10 mA,
- l'autre consiste à suivre la modification « d'état de coloration » du (des) vitrage(s), et à arrêter la consigne dès que ledit « état de coloration » atteint l'une ou l'autre des deux limites de la gamme de coloration possible (ou tout état de coloration intermédiaire entre ces deux limites).

Ce suivi de l'état de coloration du vitrage peut être fait de différentes façons, de manière directe ou indirecte. On peut notamment faire un suivi de la variation de la transmission lumineuse T_{L} propre au vitrage, à l'aide d'un capteur adapté fixé à celui-ci, par exemple du type cellule photoélectrique associée à une petite surface réfléchissante. Les deux limites de la gamme de coloration possible se déclinent alors en valeur de T_{L(d)}, par exemple d'environ 50% à l'état le plus décoloré et en valeur de T_{L(c)}, par exemple d'environ 5% à l'état le plus coloré.

Mais on peut préférer faire un suivi de « l'état de charge » du vitrage, en mesurant, par exemple, la quantité de charges transférées aux bornes du (des) vitrage(s), notamment à l'aide d'un intégrateur de courant du type coulomètre. Les deux limites de la gamme de coloration sont alors Q_{(d)} à l'état le plus décoloré, et Q_{(c)} à l'état le plus coloré. Ces valeurs Q_{(d)} et Q_{(c)} sont en fait à déterminer en fonction de nombreux paramètres, notamment la taille du (des) vitrages, le type de circuit de câblage ou encore s'il n'y a qu'un vitrage ou plusieurs, montés en série ou en parallèle ... Cet état de charge ainsi mesuré est en fait représentatif du taux d'insertion de cations dans le matériau électrochrome cathodique du type WO₃.

Une dernière manière d'opérer consiste à faire le suivi de l'état de coloration par mesure du (d'au moins un) potentiel à l'abandon entre deux points distincts de la structure électrochrome du (des) vitrages, par exemple à l'aide d'un moyen du type voltmètre, en adaptant notamment la technique décrite dans le brevet précité EP-0 568 457.

Le procédé d'alimentation est bien sûr apte à alimenter à l'aide d'un seul générateur une pluralité de vitrages électrochromes, notamment au moins deux vitrages. Ils sont montés de préférence en parallèle si l'on choisit un générateur du type générateur de tension, et de préférence en série si l'on choisit un générateur du type générateur d'intensité. S'ils sont de caractéristiques identiques, les mesures nécessaires peuvent n'être effectuées qu'au niveau d'un seul des vitrages.

Par ailleurs, le procédé selon l'invention peut en outre comporter une étape de déclenchement automatique, à l'aide du moyen de décompte du type horloge, d'une consigne d'alimentation de l'unité de contrôle au générateur destinée à décolorer le (les) vitrage(s) dès que ceux-ci ont été maintenus dans un état de coloration, quel qu'il soit, pendant un temps au moins égal à une durée déterminée dont la valeur a été initialisée par exemple de l'ordre de 5 à 8 heures, ou à heure fixe initialisée ou encore à une fréquence donnée, également initialisée. Cette étape a l'intérêt de prendre en compte, de manière pragmatique, le fait que les vitrages électrochromes actuels ne présentent qu'une capacité limitée à conserver un état de coloration donné en l'absence de toute alimentation. Quand le vitrage n'est plus soumis à un champ électrique sous l'effet d'une commande, les matériaux électrochromes ont en effet tendance à retourner dans leur état le plus stable, et, notamment, le WO₃ tend à la longue à retourner dans son état « désinséré », c'est-à-dire à son état décoloré. Un passage obligé à l'état décoloré au bout d'un certain temps peut permettre d'éviter de perdre le contrôle sur la modification de coloration du vitrage, notamment quand il n'y a pas mesure directe de la transmission lumineuse du vitrage pour « suivre » son état de coloration. Il autorise aussi, éventuellement, une fois le vitrage ainsi complètement décoloré, un ré-enclenchement également automatisé par l'unité de contrôle d'une consigne d'alimentation en vue d'une recoloration du vitrage. Par cette décoloration automatique, on s'assure de la cohérence, entre « l'état de coloration » effectif du vitrage à un instant donné, lorsqu'il n'est pas soumis à une consigne d'alimentation par le générateur, et « l'état de coloration » que l'unité de contrôle a pu mémoriser à la fin de la consigne d'alimentation de la dernière commande de modification de coloration enregistrée.

Cette étape n'est qu'optionnelle. Elle n'est notamment pas nécessaire dans le cas où l'on peut à tout moment faire une mesure effective de « l'état de coloration » du vitrage, notamment quand on a recours à un capteur de transmission lumineuse pour cela.

Le procédé d'alimentation de l'invention, par ailleurs, permet avantageusement, en fonctionnement normal, l'actionnement de la commande de modification de coloration de manière manuelle par un utilisateur non spécialisé, notamment à l'aide de trois commandes : coloration / décoloration / arrêt. Ces commandes peuvent prendre la forme de trois boutons de réglage distincts ou d'un unique bouton de sélection ou curseur permettant à l'utilisateur de choisir un état de coloration donné entre 0 et 100% de la plage d'états de coloration possibles.

Mais il peut aussi prévoir que l'unité de contrôle déclenche elle-même la commande de modification de coloration par une régulation automatisée. Ainsi, cette régulation peut être asservie à la mesure par exemple de l'éclairement à l'intérieur d'une pièce ou d'un habitacle, ou du flux solaire reçu par le vitrage, par des capteurs appropriés. Ainsi, quand les vitrages électrochromes sont destinés à équiper des façades de bâtiment, la régulation peut prévoir une coloration d'autant plus forte que l'éclairement à l'intérieur de la pièce ou le flux solaire reçu par le vitrage est importante, ou, au contraire, si les vitrages doivent avoir un « effet-volet », prévoir une coloration maximale la nuit. Peut aussi être prévue une complète décoloration du vitrage la nuit, notamment lorsqu'il s'agit de vitrages de véhicule.

Venons-en maintenant à un critère de sécurité qu'il est important que l'unité de contrôle vérifie, en règle générale, lorsque le générateur alimente le vitrage. Il s'agit de mesurer l'intensité électrique, par exemple par un ampèremètre aux bornes du générateur et/ou du (des) vitrage(s). Elle doit être différente de zéro, car en cas contraire, cela signifie qu'il y a eu coupure accidentelle du circuit faussant complètement la détermination de la consigne d'alimentation par l'unité de contrôle.

Un premier mode de réalisation consiste à choisir un générateur qui soit un générateur de tension apte à délivrer, sous consigne de l'unité de contrôle, une tension U(g) telle que la (ou « une des » dans le cas où l'on mesure plusieurs tensions entre différents points du vitrage) tension(s) U (v) mesurée entre deux points distincts de la structure électrochrome du (d'au moins un des) vitrage(s) soit égale à une tension U (c) de consigne dont le profil est fonction de la commande actionnée et de la température. L'unité de contrôle a accès à la température soit directement par un capteur du type thermocouple fixé au vitrage ou à proximité, soit indirectement à l'aide d'une impulsion électrique u (imp.) délivrée par le générateur de tension préalablement, notamment en adaptant la technique décrite dans le brevet précité EP-0 475 847.

Quatre critères de sécurité peuvent être avantageusement pris en compte avec ce mode d'alimentation, où le générateur délivre une tension, notamment :
- imposer que la température mesurée reste dans une gamme de températures initialisée, notamment allant d'environ -20°C à +80°C. Tout dépend évidemment du choix des matériaux du vitrage et de ses performances, mais une mise sous tension à trop haute température peut engendrer des détériorations, tandis qu'une température extrêmement basse tend non pas tant à détériorer véritablement le vitrage qu'à provoquer un allongement difficilement acceptable des temps de commutation,
- imposer que la différence en valeur absolue [U(c)-U(v)] reste inférieure ou égale à une valeur donnée, initialisée au départ, notamment d'environ 25 mV. On s'assure ainsi de la similarité entre le potentiel de consigne et celui effectivement mesuré, et on se prémunit contre toute déconnection accidentelle du voltmètre,
- imposer que, après mesure de la température T, et calcul de sa dérivée T' par rapport au temps, ladite dérivée reste inférieure ou égale à une valeur donnée initialisée, notamment d'environ 1 K/s. On prémunit ainsi le vitrage de l'impact préjudiciable que pourrait avoir une rupture intempestive du circuit du moyen de mesure de la température du type thermocouple,
- enfin, imposer que la différence en valeur absolue [U(g)-U(c)] reste inférieure ou égale au produit de l'intensité i mesurée dans le circuit, par exemple aux bornes du générateur, par une valeur r équivalente à une résistance, valeur initialisée. Ce produit est en effet une approximation de la valeur maximale que peut atteindre la somme des chutes ohmiques du circuit électrique dans son ensemble, excepté celles dues au(x) vitrage(s) électrochrome(s) lui-même (eux-mêmes).

Il va de soi qu'il n'est pas indispensable de vérifier systématiquement l'ensemble de ces critères, et que l'on peut ne conserver que ceux qui peuvent se révéler effectivement importants en fonction notamment de l'application envisagée du vitrage (notamment s'il est monté en intérieur ou en extérieur).

Un second mode de réalisation consiste à choisir plutôt un générateur d'intensité, apte à délivrer, sous consigne d'alimentation reçue de l'unité de contrôle, une intensité de profil adapté à la commande actionnée. Des précisions sur un tel choix de générateur peuvent être apportées par la lecture de la demande de brevet EP-683 419 précitée.

Dans ce cas, un critère de sécurité spécifique à ce mode d'alimentation peut consister en ce que, au moins quand la commande de modification de coloration est une décoloration, l'unité de contrôle impose une diminution de l'intensité délivrée au générateur (notamment d'un facteur 2). On supprime ainsi le risque de voir la (les) tension(s) U (v) entre deux points distincts de la structure électrochrome du (d'au moins un des) vitrage(s) dépasser la plage de fonctionnement en tension du vitrage, en adaptant l'intensité délivrée.

Dans ce même but, ce critère de sécurité peut aussi consister à diminuer l'intensité délivrée quand la dérivée de la ( ou d'au moins l'une des) tension(s) par rapport au temps dU(v)/dt atteint une valeur-seuil donnée. Enfin, un dernier critère peut, pour garantir ce maintien dans la plage de fonctionnement en tension du vitrage, prévoir une diminution de l'intensité délivrée par le générateur (notamment encore d'un facteur 2) quand le calcul de la dérivée-seconde de la (ou d'au moins l'une des) tension(s) mesurée(s) entre deux points distincts de la structure électrochrome du vitrage par rapport au temps d²U(v)/dt² atteint une valeur-seuil donnée : il s'agit toujours d'éviter la dérive de la (des) tension(s) entre deux points distincts de la structure électrochrome du vitrage vers des valeurs qui pourraient dégrader le système électrochrome. Il peut être prévu d'avoir deux valeurs-seuils distinctes, l'une valable en coloration, l'autre en décoloration, à chaque fois.

Un autre critère de sécurité peut consister à imposer que la différence en valeurs absolues entre l'intensité de consigne d'alimentation i(c) et l'intensité effectivement mesurée par exemple aux bornes du vitrage reste inférieure à une valeur donnée initialisée. On s'assure ainsi de la similarité entre intensité de consigne et intensité effective. On se prémunit aussi d'éventuels problèmes avec l'ampèremètre.

On peut aussi appliquer certains des critères de sécurité évoqués précédemment dans le cas où l'on utilise un générateur de tension, et plus particulièrement celui imposant le maintien de la température mesurée dans une plage de températures initialisées.

Le procédé d'alimentation selon l'invention s'adapte très aisément à la commande de vitrage(s) électrochrome(s) varié(s), d'applications diverses, notamment des vitrages pour véhicules du type vitrages latéraux, arrières ou vitrages de toit-ouvrant, éventuellement bombés, mais aussi des vitrages intérieurs ou extérieurs pour bâtiment.

Il peut ainsi s'agir de vitrages électrochromes de structure feuilletée à usage extérieur, comportant une première feuille de verre extérieure, une couche de polymère organique d'assemblage filtrant les ultraviolets, une seconde feuille de verre intermédiaire et une troisième feuille de verre intérieure entre lesquelles sont disposées les couches de l'empilement du système électrochrome dont deux couches électroconductrices margées munies chacune d'une piste sérigraphiée conductrice reliée à une arrivée de courant externe. La seconde feuille est de préférence de taille inférieure aux deux autres, délimitant ainsi une gorge périphérique dans laquelle est disposé un joint ou un double-joint d'étanchéité, affleurant leurs chants ou les encapsulant.

Ces vitrages peuvent être conçus mobiles par rapport à un châssis fixe du type encadrement de fenêtre ou baie de carrosserie de véhicule, avantageusement sans interruption de connexion électrique avec le circuit de commande quelle que soit leur position par rapport à leur châssis.

Une structure feuilletée comme décrite précédemment peut être avantageusement complétée par une quatrième feuille de verre associée à la troisième par une lame de gaz intercalaire pour constituer un vitrage multiple du type isolant, comme cela est par exemple décrit dans le brevet européen EP-575 207.

Les détails et caractéristiques avantageuses de l'invention vont maintenant ressortir de la description détaillée ci-après de modes de réalisation de l'invention illustratifs mais non limitatifs, cette description étant faite en référence aux figures annexées qui représentent :
**figure 1** : une représentation en coupe schématique d'un vitrage électrochrome,
**figure 2** : une représentation très schématique d'un organigramme de commande, dans le cas d'une alimentation par générateur de tension,
**figure 3** : une représentation très schématique d'un organigramme de commande, dans le cas d'une alimentation par générateur d'intensité.

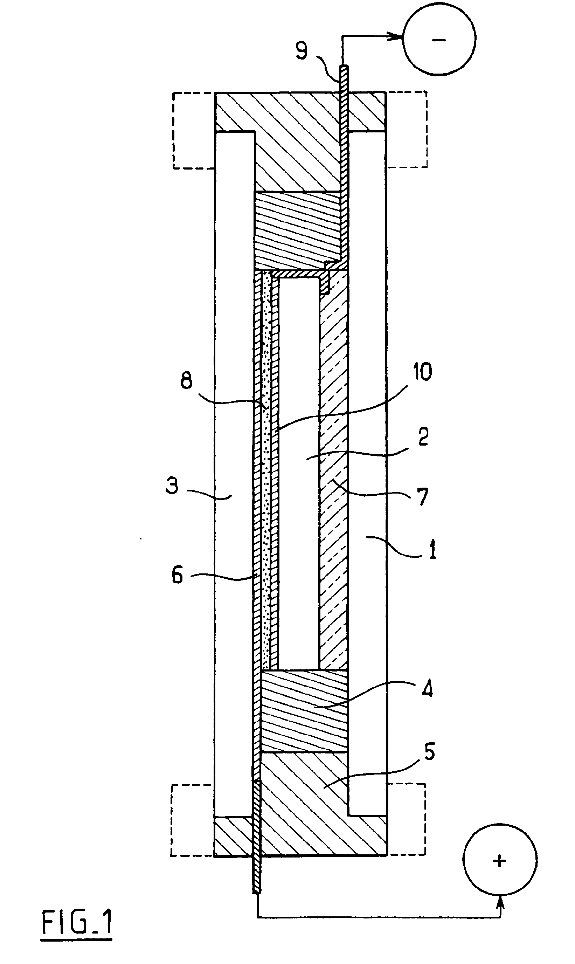

Le vitrage représenté en coupe en figure 1, sans respecter les proportions afin d'en faciliter la lecture, est destiné à être monté en toit-ouvrant dans une voiture. Il comporte trois substrats 1, 2, 3 de verre clair silico-sodo-calcique du type float, le premier d'environ 1,5 à 1,7 mm d'épaisseur, le second d'environ 1,8 à 2 mm d'épaisseur et le troisième, également d'environ 1,8 à 2 mm d'épaisseur. Les substrats sont à peu près rectangulaires, les verres 1 et 3 ayant une dimension d'environ 40 x 80 cm². C'est le verre 1 qui est destiné à être disposé du côté extérieur du véhicule. Conventionnellement, on numérotera ci-après chacune des faces des verres de 1 à 6 en commençant par le verre 1 extérieur. Les trois verres sont légèrement bombés, et le second, un peu plus petit que les deux autres, permet de délimiter une gorge périphérique entre les verres 1 et 3 d'une profondeur d'environ 5 à 9 mm, dans laquelle sont disposés les joints 4, 5. Le premier joint est en butyl, le second en polysulfure ou en polyuréthane. Le double-joint peut être affleurant, ou, comme l'indiquent les pointillés, débordant ou encore encapsulant la périphérie des verres 1 et 3.

Les verres 1 et 2 sont assemblés par une couche de polyvinylbutyral PVB 7 contenant des additifs anti-ultraviolet, d'une épaisseur d'environ 0,3 à 1 mm. Entre les verres 2 et 3 se trouve l'empilement électrochrome 8, du type de celui décrit dans les brevets précités auxquels on se rapportera pour plus de détails : une couche électroconductrice du type ITO ou SnO₂:F sur les faces 4 et 5, chacune margée sur une distance d'environ 5 à 10 mm sur leur longueur, de façon à ce que lesdites marges soient diamétralement opposées (le margeage s'effectue lors du dépôt par masquage, ou après dépôt par décapage chimique ou mécanique du type sablage). Cette précaution est utile pour éviter que des courts-circuits significatifs préjudiciables se produisent directement d'une couche électrochrome à l'autre par l'intermédiaire du joint 4, quand celui-ci se trouve être éventuellement un peu conducteur électriquement. Entre les deux couches électroconductrices, sont disposées une couche électrochrome d'IrO₂ et une couche électrochrome de WO₃ séparées par une couche d'électrolyte polymérique à base de solution solide de polyoxyéthylène et d'acide phosphorique. Dans ce cas précis, il s'agit donc d'un système électrochrome fonctionnant par transfert protonique. (Mais il va de soi que l'on peut tout aussi bien utiliser un vitrage électrochrome fonctionnant par transfert d'ions lithium, par exemple en substituant de l'oxyde de nickel à l'oxyde d'iridium et en adoptant un autre type d'électrolyte comme du polyoxyéthylène dopé au triflate de lithium, ou tout autre système électrochrome).

Les deux pistes de pâte à l'argent sérigraphiées 6, 10 sont recouvertes d'un émail isolant, là encore pour éviter tout court-circuit accidentel. Elles servent de bandes d'amenée de courant aux couches conductrices, sont diamétralement opposées l'une à l'autre, et sont connectées par soudure à l'argent à des fils métalliques 9 du type ruban de cuivre « sortant » du vitrage en face 2 ou 6 pour l'un, 5 ou 6 pour l'autre, avec éventuellement cheminement sur le chant d'une des feuilles de verre. Leur fixation est assurée alors par soudure à l'argent et/ou collage sur verre.

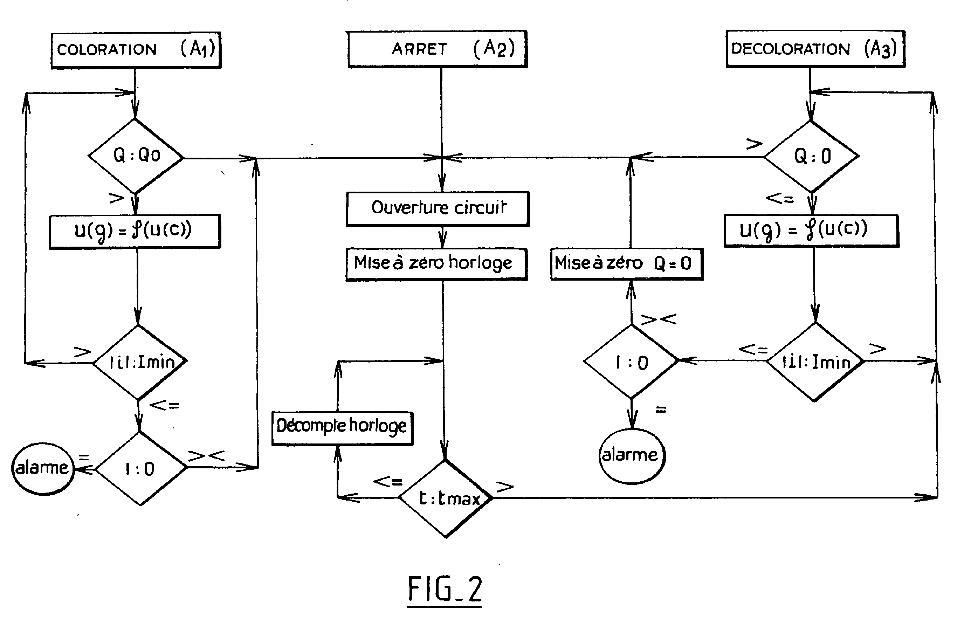

Prenons le premier mode de réalisation de la commande électrique d'un tel vitrage monté en parallèle avec un second vitrage identique, et qui consiste à choisir un générateur de tension comme source d'électricité. La structure du système de commande est alors, schématiquement la suivante :
- aux bornes d'un des deux vitrages muni d'amenées de courant, on mesure la tension U(v) à l'aide d'un voltmètre,et on mesure l'intensité i (v) aux bornes du générateur à l'aide d'un ampèremètre relié à un moyen d'intégrateur de courant Q du type coulomètre. Le circuit comporte aussi une horloge, des moyens électroniques de calcul, une unité de contrôle munie d'une interface-utilisateur et un moyen de mesure de température du type thermocouple associé à l'un des vitrages. Le mode de pilotage du vitrage est schématiquement représenté en figure 2 sous forme d'un organigramme simplifié présentant la suite logique des opérations déclenchées par les commandes. Il est le suivant :
   ⇒ un opérateur règle tout d'abord l'unité de contrôle notamment en introduisant :
      . la quantité de charges Q_{(c)}= -100 C correspond à « l'état de charge » des vitrages dans leur état de coloration maximale, (T_{L} de l'ordre de 5%) et la quantité de charge Q_{(d)} = O correspond à « l'état de charge » nul des vitrages dans leur état de décoloration maximale (T_{L} de l'ordre de 30%),
      . la plage de fonctionnement en températures : -20°C à +80°C,
      . les valeurs de tension de consigne U_{c}(T), en coloration et en décoloration, choisies selon le type de vitrage électrochrome et en dépendance de la température de fonctionnement inclue dans la plage de température précédente,
      . l'intensité minimale Iₘᵢₙ choisie entre 0,1 et 10mA, pouvant circuler dans le circuit,
      . le temps t_{MAX} à décompter par l'horloge, notamment de 1 à 24 heures,
      . le réglage d'une valeur de déperdition ohmique r, de 0,1 à 1 ohm,
      . la tolérance sur les écarts de tension entre tension de consigne et tension mesurée : 25 mV,
      . « l'état de charge » Q, du vitrage au moment de sa connexion au circuit.
   un utilisateur peut ensuite actionner 3 boutons de commande au niveau de l'interface : A₁ correspondant à une coloration, A₂ à un arrêt, A₃ à une décoloration. S'il actionne une coloration (A₁), l'unité de contrôle enregistre la commande et vérifie d'abord que le capteur de température du vitrage mesure une température comprise dans la gamme de stabilité, et met en mémoire cette valeur de température. Elle lit l'état de charge Q, mesuré par le coulomètre à la fin de la consigne d'alimentation due à la commande précédente, et qu'elle a mémorisé. Elle le compare à l'état de charge à atteindre. Elle déclenche ensuite une alimentation par le générateur d'une tension U (g) définie telle que la tension U (v) aux bornes du vitrage soit la plus proche possible de la tension U (c) consigne qu'elle a déterminée par la mesure de la température effectuée au départ par le thermocouple. L'unité de contrôle stoppe l'alimentation et se remet en position d'attente (avec notamment remise à zéro du coulomètre) dès que la valeur Q mesurée atteint la valeur Q_{(c)} initialisée ou que la mesure de l'intensité i atteint la valeur I_{MIN} initialisée au départ. Sinon, l'alimentation en électricité est poursuivie par un bouclage sur des mesures successives de Q et i. En parallèle, à chaque « boucle », tant que l'une ou l'autre de ces valeurs Q_{(c)} et I_{MIN} ne sont pas atteintes, le générateur vérifie, à une fréquence de quelques millisecondes par exemple, les critères de sécurité suivants :(non représentés à la figure 2)
      1. la température mesurée reste entre -20 et +80°C,
      2. la dérivée par rapport au temps de celle-ci reste inférieure ou égale en valeur absolue à 1 K/s,
      3. l'écart entre U (c)- U (v) mesuré est inférieur à 25 mV en valeur absolue,
      4. l'écart entre la tension délivrée U (g) et la tension de consigne U (c) est inférieur en valeur absolue au produit de r, valeur initialisée, par la valeur d'intensité i mesurée,
      5. l'intensité mesurée est non nulle.

On peut noter, concernant ce dernier critère, que l'unité de contrôle le vérifie aussi lorsqu'on « sort » du processus de bouclage, quand l'intensité i franchit le seuil de Iₘᵢₙ. Il faut en effet vérifier aussi à ce niveau si le franchissement de ce seuil est bien dû au fait que la coloration voulue est atteinte, ou s'il s'agit d'une déconnexion accidentelle.

Si un des critères n'est pas respecté, l'unité de contrôle arrête le processus d'alimentation, ouvre le circuit électrique (sur la figure 2 : mode « alarme»). Il peut alors être prévu un voyant lumineux ou sonore avertissant l'utilisateur d'un dysfonctionnement, nécessitant un ré-enclenchement manuel soit accessible à l'utilisateur même, soit exclusivement accessible à un opérateur spécialisé, suivant la gravité du non-respect du critère de sécurité en question.

L'utilisateur peut aussi interrompre à tout moment le processus de coloration par la commande A₂, qui coupe l'alimentation électrique (comme si l'objectif de coloration maximal avait été atteint).

De manière similaire à la commande A₁ de coloration, l'utilisateur peut actionner la commande A₃ de décoloration, avec lecture de l'état de charge actuel Q pour le comparer cette fois à Q_{(d)}=O et une consigne d'alimentation en tension de signe opposé, toujours fonction de la température mesurée et adaptée cette fois à une décoloration. Le « bouclage » s'effectue comme précédemment avec vérification des mêmes critères de sécurité jusqu'à ce que la charge Q atteigne la valeur Q_{(d)}=O ou que i atteigne la valeur I_{MIN}.

Dès que l'objectif de décoloration (ou de coloration de façon identique) est atteint ou que l'utilisateur a interrompu le processus par la commande A₂, l'horloge se met à décompter le temps et informe l'unité de contrôle dès que le temps t initialisé, par exemple de 8 heures, est écoulé. L'unité de contrôle déclenche alors automatiquement, elle-même, une commande de décoloration A₃ pour remettre le vitrage, qui se trouve dans un état de coloration intermédiaire ou maximal, à l'état complètement décoloré.

Les trois commandes A₁, A₂, A₃ sont prévues exclusives entre elles.

Prenons maintenant le second mode de réalisation de la commande électrique de l'invention, ayant recours à un générateur d'intensité, avec les mêmes deux vitrages montés cette fois en série. On conserve le voltmètre, l'ampèremètre, le coulomètre et le thermocouple utilisés précédemment, ainsi que l'horloge, des moyens électroniques de calcul et la même unité de contrôle munie d'une interface-utilisateur.

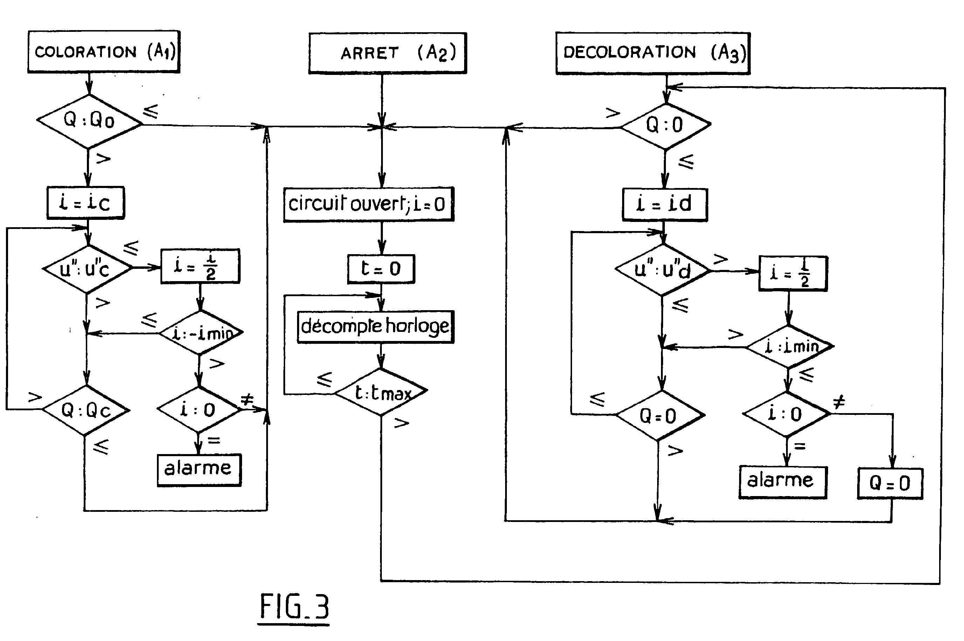

Le pilotage en intensité est représenté schématiquement en figure 3 sous la forme d'un organigramme simplifié.

Son fonctionnement est le suivant :
⇒ un opérateur règle l'unité de contrôle, notamment en introduisant les mêmes valeurs de Q(c), Q_{(d)}, plage de températures, I_{MIN} en valeur absolue, t_{MAX} et Qᵢ que précédemment. Il introduit également :
   - les valeurs-seuils de la dérivée seconde de la tension par rapport au temps, en coloration U"_{(c)}, et en décoloration U"_{(d)} choisies, en valeur absolue, entre 0,1 et 10 mV/s², notamment d'environ 0,5 mV/s²,
   - la tolérance sur les écarts d'intensité entre intensité de consigne et intensité mesurée : 0,1 mA,
   - la valeur d'intensité de coloration I_{(c)} = -100 mA
   - la valeur d'intensité de décoloration I_{(d)} = + 200 mA.

L'utilisateur a toujours les mêmes commandes : A₁, A₂ ou A₃. Si l'utilisateur actionne une coloration A₁, comme précédemment, l'unité de contrôle enregistre la commande, vérifie par le thermocouple que l'on est dans la plage de températures de fonctionnement initialisé et lit l'état de charge Q mémorisé. Elle déclenche ensuite une alimentation par le générateur d'intensité i(c) adaptée à la commande. Comme précédemment, l'alimentation est poursuivie tant que l'intensité mesurée aux bornes d'un des vitrages n'a pas atteint la valeur Iₘᵢₙ ou que l'état de charge Q n'a pas atteint la valeur Q_{(c)}.

En parallèle, à chaque « boucle » le générateur vérifie, les critères de sécurité suivants :
1. La température mesurée par le thermocouple reste dans la plage -20°C +80°C,
2. l'écart en valeur absolue entre l'intensité mesurée aux bornes du vitrage et l'intensité de consigne i_{(c)} reste inférieur ou égal à 0,1 mA,
3. la dérivée seconde de la tension mesurée aux bornes du vitrage par rapport au temps U" reste supérieure strictement à la valeur-seuil initialisée U_{(c)}",
4. l'intensité mesurée aux bornes du vitrage est non nulle.

Si l'un des critères 1, 2 ou 4 n'est pas respecté, l'unité de contrôle interrompt la consigne d'alimentation. Il y a ouverture du circuit et mise en mode «alarme» comme précédemment. La même remarque concernant le critère 4 faite précédemment s'applique : l'unité de contrôle doit aussi vérifier ce critère lorsqu'on « sort » de la boucle.

Si c'est le critère 3 qui n'est pas respecté, l'unité de contrôle diminue par 2 la valeur d'intensité i_{(c)} de consigne imposée au générateur, ce qui a pour effet d'éviter que la tension aux bornes du vitrage n'atteigne des valeurs qui pourraient être dégradantes, sans pour autant stopper le processus de coloration. On pourra se reporter à ce sujet notamment à la demande de brevet EP-683 419 précitée. A noter que l'on peut prévoir une temporisation sur le calcul de U" après chaque diminution de l'intensité d'un facteur 2, afin de laisser la tension se stabiliser aux bornes du vitrage suite à cette modification d'alimentation, un contrôle de la tension pouvant être effectué pendant cette temporisation.

La consigne de décoloration s'opère de manière symétrique. L'horloge remplit la même fonction que précédemment.

## Revendications

1. Procédé d'alimentation électrique d'au moins deux vitrages électrocommandables du type électrochrome afin d'en faire varier l'état de coloration, **caractérisé en ce qu'**il prévoit un circuit de commande électrique comprenant des moyens de connexion électrique pour relier les couches électroconductrices des vitrages audit circuit, le circuit permettant d'alimenter électriquement au moins deux vitrages électrochromes, un générateur d'électricité pour alimenter les vitrages électrochromes sous la consigne d'une unité de contrôle munie d'une interface-utilisateur, et utilisant un moyen de décompte du temps et des moyens de mesure et de calcul de caractéristiques physiques du circuit et d'une des vitrages dont au moins un moyen de mesure de la tension électrique entre deux points distincts de la structure électrochrome dudit vitrage, un moyen de mesure de l'intensité électrique et un moyen de mesure de l'état de coloration dudit vitrage, ledit procédé comportant les étapes suivantes :
o initialisation de l'unité de contrôle par des données de fonctionnement caractéristiques dudit vitrage et du circuit, dont les deux limites de la gamme d'état de coloration possible,
o actionnement d'une commande de modification d'état de coloration à l'aide de l'interface-utilisateur,
o enregistrement de la commande par l'unité de contrôle,
o déclenchement d'une consigne d'alimentation de l'unité de contrôle au générateur pour une réponse adaptée à la commande, consigne dépendant des données de fonctionnement initialisées et des mesures de caractéristiques physiques, dont la mesure ou la lecture d'une mesure mémorisée de l'état de coloration dudit
o suivi de la modification de l'état de coloration dudit vitrage par l'unité de contrôle sous l'effet de l'alimentation électrique aux bornes dudit vitrage par le générateur et vérification par l'unité de contrôle, à une fréquence donnée, du respect d'au moins un critère de sécurité déterminé par les données initialisées et/ou la mesure d'au moins une caractéristique physique du circuit ou dudit vitrage,
o modification de la consigne d'alimentation par l'unité de contrôle au générateur en cas de non-respect d'au moins un critère de sécurité,et éventuellement avertissement de l'utilisateur,
o arrêt de la consigne d'alimentation de l'unité de contrôle au générateur, par interruption volontaire de la commande au niveau de l'interface utilisateur ou par atteinte de l'objectif de coloration fixé par la commande, et remise en situation d'attente de commande de l'unité de contrôle.

2. Procédé d'alimentation électrique selon la revendication 1, **caractérisé en ce que** la modification de la consigne d'alimentation de l'unité de contrôle en cas de non- respect d'un des critères de sécurité consiste à ce que l'unité de contrôle commande l'ouverture du circuit électrique.

3. Procédé d'alimentation électrique selon l'une des revendications précédentes, **caractérisé en ce que** l'arrêt de la consigne d'alimentation de l'unité de contrôle par atteinte de l'objectif de coloration fixé à la commande s'opère dès que l'intensité électrique mesurée circulant dans le circuit atteint une valeur minimale initialisée, notamment choisie en valeur absolue entre 0,1 et 10 mA, ou que l'état de coloration dudit vitrage mesuré atteint l'une ou l'autre des deux limites de la gamme d'états de coloration possibles, initialisés également.

4. Procédé d'alimentation électrique selon l'une des revendications précédentes, **caractérisé en ce que** le suivi de l'état de coloration dudit vitrage se fait par mesures de son état de charge par un moyen de mesure de l'état de charges Q dudit vitrage, du type intégrateur de courant tel qu'un coulomètre

5. Procédé d'alimentation électrique selon la revendication 4, **caractérisé en ce que** les deux limites de la gamme d'états de coloration possible initialisées sont Q_{(d)}=O à l'état le plus décoloré et Q_{(c)} à l'état le plus coloré.

6. Procédé d'alimentation électrique selon l'une des revendications 1 à 3, **caractérisé en ce que** le suivi de l'état de coloration dudit vitrage se fait par mesures de la transmission lumineuse T_{L} dudit vitrage, à l'aide d'un capteur adapté fixé audit vitrage, avec notamment comme deux limites de la gamme d'états de coloration possibles T_{L(d)} ≅ 50% à l'état décoloré ef T_{L(c)}≅5% à l'état coloré.

7. Procédé d'alimentation électrique selon l'une des revendications 1 à 3, **caractérisé en ce que** le suivi de l'état de coloration dudit vitrage se fait par mesures du potentiel à l'abandon à l'aide d'un moyen du type voltmètre.

8. Procédé d'alimentation électrique selon l'une des revendications précédentes, **caractérisé en ce que** les au moins deux vitrages électrochromessont montés en parallèle si le générateur est un générateur de tension ou montés en série si le générateur est un générateur d'intensité.

9. Procédé d'alimentation électrique selon l'une des revendications précédentes, **caractérisé en ce qu'**il comporte aussi une étape de déclenchement automatique, à l'aide du moyen de décompte du temps du type horloge, d'une consigne d'alimentation de l'unité de contrôle au générateur pour décolorer les vitrages quand ceux-ci ont été maintenus dans un état de coloration maximal ou intermédiaire pendant un temps au moins égal à une durée déterminée dont la valeur a été initialisée, notamment une durée comprise entre 1 et 24 heures, ou à une fréquence donnée initialisée, ou encore à heure fixe initialisée.

10. Procédé d'alimentation électrique selon l'une des revendications précédentes, **caractérisé en ce que** l'actionnement de la commande de modification d'état de coloration s'effectue manuellement et/ou par régulation automatisée, notamment asservie à la mesure de l'éclairement ou du flux solaire, par des capteurs appropriés.

11. Procédé d'alimentation électrique selon l'une des revendications précédentes, **caractérisé en ce qu'**un des critères de sécurité est que l'intensité électrique mesurée par un ampèremètre aux bornes du générateur et/ou dudit vitrage doit être différente de zéro.

12. Procédé d'alimentation selon l'une des revendications précédentes, **caractérisé en ce qu'**un critère de sécurité est que la température mesurée quand le générateur délivre une tension aux bornes des vitrages reste dans une gamme de températures initialisée, notamment allant d'environ - 20°C à +80°C.

13. Procédé d'alimentation selon l'une des revendications précédentes, **caractérisé en ce qu'**on mesure la température du vitrage soit directement par un capteur du type thermocouple fixé à celui-ci ou placé à proximité, soit indirectement à l'aide d'une impulsion électrique délivrée par le générateur.

14. Procédé d'alimentation électrique selon l'une des revendications précédentes, **caractérisé en ce que** le générateur est un générateur de tension apte à délivrer, sous consigne d'alimentation reçue de l'unité de contrôle, une tension U (g) telle que la tension U (v) mesurée entre deux points distincts de la structure électrochrome dudit vitrage soit égale à une tension U (c) de consigne dont le profil est fonction de la commande actionnée et de la température.

15. Procédé d'alimentation selon la revendication 14, **caractérisé en ce qu'**un critère de sécurité consiste à vérifier, quand le générateur délivre une tension aux bornes des vitrages que la différence en valeurs absolues U(c)-U(v) reste inférieure ou égale à une valeur de tension donnée initialisée, notamment d'environ 25 mV.

16. Procédé d'alimentation selon l'une des revendications 14 ou 15, **caractérisé en ce qu'**un critère de sécurité consiste à mesurer la température puis à calculer, quand le générateur délivre une tension aux bornes des vitrages, la dérivée de la température par rapport au temps, pour vérifier que ladite dérivée reste inférieure ou égale à une valeur donnée initialisée, notamment d'environ 1 K/s.

17. Procédé d'alimentation selon l'une des revendications 14 à 16, **caractérisé en ce qu'**un critère de sécurité consiste à vérifier, quand le générateur délivre une tension aux bornes dudit vitrage, que la différence dudit en valeur absolue [U(g) - U (c)] est inférieure ou égale au produit de l'intensité i mesurée aux bornes du générateur par une valeur r équivalente à une résistance initialisée.

18. Procédé d'alimentation selon l'une des revendications 1 à 13, **caractérisé en ce que** le générateur est un générateur d'intensité apte à délivrer, sous consigne d'alimentation reçue de l'unité de contrôle, une intensité de profil adapté à la commande actionnée.

19. Procédé d'alimentation selon la revendication 18, **caractérisé en ce qu'**un critère de sécurité consiste à ce que, au moins quand la commande de modification de coloration est une décoloration, l'unité de contrôle impose une diminution de l'intensité délivrée par le générateur, notamment d'un facteur 2, quand la dérivée-seconde par rapport au temps de la tension mesurée entre deux points distincts de la structure électrochrome dudit vitrage atteint une valeur-seuil initialisée, notamment proche de 0,5 dudit mV/s² en valeur absolue.

20. Procédé d'alimentation selon la revendication 18 ou 19, **caractérisé en ce qu'**un critère de sécurité consiste à ce que la différence en valeur absolue entre l'intensité de consigne et l'intensité effectivement mesurée reste inférieure ou égale à une valeur initialisée, notamment d'environ 0,1 mA.

21. Application du procédé de commande selon l'une des revendications précédentes à la commande de vitrages électrochromes équipant des véhicules, notamment des vitrages latéraux, des vitrages arrière et des vitrages de toits-ouvrants de voiture.

22. Application du procédé de commande selon l'une des revendications 1 à 20 à la commande de vitrages électrochromes équipant des bâtiments comme vitrages intérieurs ou extérieurs.

23. Ensemble comprenant au moins deux vitrages électrochromes comprenant une structure électrochrome comprenant au moins une couche constituée d'un matériau électrochrome, la structure étant délimitée par deux couches électroconductrices munies de leurs amenées de courant, l'ensemble comprenant un circuit de commande électrique comprenant des moyens de connexion électrique pour relier les couches électroconductrices desdits au moins deux vitrages audit circuit, un générateur d'électricité pour alimenter les couches électroconductrices des au moins deux vitrages électrochromes sous la consigné d'une unité de contrôle munie d'une interface-utilisateur, et utilisant un moyen de décompte du temps et des moyens de mesure et de calcul de caractéristiques physiques du circuit et d'un vitrage dont au moins un moyen de mesure de la tension électrique entre deux points distincts de la structure électrochrome dudit vitrage, un moyen de mesure de l'intensité électrique et un moyen de mesure de l'état de coloration dudit vitrage, l'ensemble étant apte à exécuter les étapes suivantes :
o initialisation de l'unité de contrôle par des données de fonctionnement caractéristiques des vitrages et du circuit, dont les deux limites de la gamme d'état de coloration possible,
o actionnement d'une commande de modification d'état de coloration à l'aide de l'interface-utilisateur,
o enregistrement de la commande par l'unité de contrôle,
o déclenchement d'une consigne d'alimentation de l'unité de contrôle au générateur pour une réponse adaptée à la commande, consigne dépendant des données de fonctionnement initialisées et des mesures de caractéristiques physiques, dont la mesure ou la lecture d'une mesure mémorisée de l'état de coloration vitrage,
o suivi de la modification de l'état de coloration dudit vitrage par l'unité de contrôle sous l'effet de l'alimentation électrique aux bornes dudit vitrage par le générateur et vérification par l'unité de contrôle, à une fréquence donnée, du respect d'au moins un critère de sécurité déterminé par les données initialisées et/ou la mesure d'au moins une caractéristique physique du circuit ou dudit vitrage,
o modification de la consigne d'alimentation par l'unité de contrôle au générateur en cas de non-respect d'au moins un critère de sécurité, et éventuellement avertissement de l'utilisateur,
o arrêt de la consigne d'alimentation de l'unité de contrôle au générateur, par interruption volontaire de la commande au niveau de l'interface utilisateur ou par atteinte de objectif de coloration fixe par la commande, et remise en situation d'attente de commande de l'unité de contrôle.

24. Ensemble selon la revendication 23, dans lequel les au moins deux vitrages électrochromes sont de structure feuilletée à usage extérieur,les au moins deux vitrages comportant une première feuille de verre (1) extérieure, une couche (7) de polymère organique d'assemblage filtrant les rayons ultraviolets, une seconde feuille (2) de verre intermédiaire et une troisième feuille (3) de verre intérieure entre lesquelles sont disposées les couches de l'empilement du système électrochrome (8) dont deux couches électroconductrices margées et munies chacune d'une piste sérigraphiée (6, 10) conductrice reliée à une amenée (9) de courant externe,.

25. ensemble selon la revendication 24, **caractérisés en ce que** la seconde feuille (2) est de taille inférieure aux deux autres (1, 3), avec pose dans la gorge périphérique ainsi délimitée entre ces dernières d'un joint ou d'un double-joint (4, 5) affleurant leurs chants ou les encapsulant.

26. Ensemble selon la revendication 24 ou 25, **caractérisés en ce qu'**ils sont conçus pour être montés mobiles par rapport à un châssis fixe du type encadrement de fenêtre ou baie de carrosserie de véhicule sans interruption de connexion électrique avec le circuit de commande quelle que soit leur position par rapport audit châssis.

## Claims

1. Process for the electrical powering of at least two electrically drivable glazings of the electrochromic type in order to cause variation of the state of coloration thereof, **characterized in that** it provides an electrical drive circuit comprising electrical connection means for connecting the electrically conductive layers of the glazings to said circuit, the circuit permitting the electrical powering of at least two electrochromic glazings, an electricity generator to power the electrochromic glazings under the instruction of a control unit equipped with a user interface, and utilizing a means for counting the time and means for measuring and computing physical characteristics of the circuit and of one of the glazings including at least one means for measuring the electrical voltage between two distinct points of the electrochromic structure of said glazing, a means for measuring the electric current and a means for measuring the state of coloration of said glazing, said process including the following steps:
ο initialization of the control unit using operational data which are characteristic of said glazing and of the circuit, including the two limits of the possible range of state of coloration,
ο activation of a coloration state modification drive command with the aid of the user interface,
ο recording of the drive command by the control unit,
ο initiation of a powering instruction from the control unit to the generator for a suitable response to the drive command, being an instruction dependent upon the initialized operational data and the measurements of physical characteristics, including the measurement or the reading of a stored measurement of the state of coloration of said glazing,
ο following of the modification of the state of coloration of said glazing by the control unit under the effect of the electrical powering at the terminals of said glazing by the generator and verification by the control unit, at a given frequency, of compliance with at least one safety criterion determined by the initialized data and/or the measurement of at least one physical characteristic of the circuit or of said glazing,
ο modification of the powering instruction by the control unit to the generator in the event of noncompliance with at least one safety criterion and possibly warning of the user,
ο halting of the powering instruction from the control unit to the generator, by intentional interruption of the drive command at the user interface or by reaching the coloration target fixed by the drive command, and return to situation awaiting drive command from the control unit.

2. Process of electrical powering according to Claim 1, **characterized in that** the modification of the powering instruction from the control unit in the event of noncompliance with one of the safety criteria consists **in that** the control unit commands the opening of the electrical circuit.

3. Process of electrical powering according to one of the preceding claims, **characterized in that** the halting of the powering instruction from the control unit by reaching the coloration target fixed in the drive command operates as soon as the measured electric current flowing in the circuit reaches an initialized minimum value, in particular chosen in absolute value between 0.1 and 10 mA, or the state of coloration of said glazing which has been measured reaches one or the other of the two limits of the range of possible states of coloration, which were likewise initialized.

4. Process of electrical powering according to one of the preceding claims, **characterized in that** the following of the state of coloration of said glazing is undertaken by measurements of its state of charge by a means for measuring the state of charges Q of said glazing, of the current integrating type such as a coulometer.

5. Process of electrical powering according to Claim 4, **characterized in that** the two limits of the range of states of possible coloration which were initialized are Q(_{d})= 0, in the most decoloured state and Q_{(c)}, in the most coloured state.

6. Process of electrical powering according to one of Claims 1 to 3, **characterized in that** the following of the state of coloration of said glazing is undertaken by measurements of the light transmission T_{L} of said glazing, with the aid of an appropriate sensor fixed to said glazing, with, in particular, as two limits of the range of possible states of coloration T L_{(d)}≅ 50% in the decoloured state and T_{L(c)}≅ 5% in the coloured state.

7. Process of electrical powering according to one of Claims 1 to 3, **characterized in that** the following of the state of coloration of said glazing is undertaken by measurements of the release potential with the aid of a means of the voltmeter type.

8. Process of electrical powering according to one of the preceding claims, **characterized in that** the at least two electrochromic glazings are connected in parallel if the generator is a voltage generator, or connected in series if the generator is a current generator.

9. Process of electrical powering according to one of the preceding claims, **characterized in that** it further includes a step of automatic initiation, with the aid of the means for counting the time of the clock type, of a powering instruction from the control unit to the generator to decolour the glazings when the latter have been maintained in a maximum or intermediate state of coloration for a time at least equal to a specified duration, the value of which has been initialized, in particular a duration within the range between 1 and 24 hours, or at an initialized frequency, or again at an initialized fixed time.

10. Process of electrical powering according to one of the preceding claims, **characterized in that** the activation of the coloration state modification drive command is undertaken manually and/or by automated regulation, in particular slaved to the measurement of the illumination or of the solar flux, by appropriate sensors.

11. Process of electrical powering according to one of the preceding claims, **characterized in that** one of the safety criteria is that the electric current measured by an ammeter at the terminals of the generator and/or of said glazing must be different from zero.

12. Process of powering according to one of the preceding claims, **characterized in that** one safety criterion is that the temperature measured when the generator delivers a voltage to the terminals of the glazings remains within an initialized range of temperatures, in particular ranging from approximately -20°C to +80°C.

13. Process of powering according to one of the preceding claims, **characterized in that** the temperature of the glazing is measured either directly by a sensor of the thermocouple type fixed or placed in proximity to the latter, or indirectly with the aid of an electrical pulse delivered by the generator.

14. Process of electrical powering according to one of the preceding claims, **characterized in that** the generator is a voltage generator capable of delivering, under powering instruction received from the control unit, a voltage U (g) such that the voltage U (v) measured between two distinct points of the electrochromic structure of the said glazing is equal to a setpoint voltage U (c), the profile of which is a function of the activated drive command and of the temperature.

15. Process of powering according to Claim 14, **characterized in that** a safety criterion consists in verifying, when the generator delivers a voltage to the terminals of the glazings, that the difference in absolute values U(c)-U(v) remains less than or equal to an initialized given voltage value, in particular of approximately 25 mV.

16. Process of powering according to one of Claims 14 or 15, **characterized in that** a safety criterion consists in measuring the temperature and then in computing when the generator delivers a voltage to the terminals of the glazings, the differential of the temperature with respect to time, in order to verify that said differential remains less than or equal to an initialized given value, in particular of approximately 1 K/s.

17. Process of powering according to one of Claims 14 to 16, **characterized in that** a safety criterion consists in verifying, when the generator delivers a voltage to the terminals of said glazing, that the difference in absolute value [U(g) - U(c)] is less than or equal to the product of the current i measured at the terminals of the generator and a value r equivalent to an initialized resistance.

18. Process of powering according to one of Claims 1 to 13, **characterized in that** the generator is a current generator capable of delivering, under powering instruction received from the control unit, a current of profile adapted to the activated drive command.

19. Process of powering according to Claim 18, **characterized in that** a safety criterion consists **in that**, at least when the coloration modification drive command is a decoloration, the control unit requires a reduction of the current delivered by the generator, in particular by a factor 2, when the second differential with respect to time of the voltage measured between two distinct points of the electrochromic structure of said glazing reaches an initialized threshold value, in particular close to 0.5 mV/s² in absolute value.

20. Process of powering according to Claim 18 or 19, **characterized in that** a safety criterion consists **in that** the difference in absolute value between the setpoint current and the current actually measured remains less than or equal to an initialized value, in particular of approximately 0.1 mA.

21. Application of the drive process according to one of the preceding claims to the drive of electrochromic glazings equipping vehicles, in particular side glazings, rear glazings and car sunroof glazings.

22. Application of the drive process according to one of Claims 1 to 20 to the drive of electrochromic glazings equipping buildings as interior or exterior glazings.

23. Assembly comprising at least two electrochromic glazings comprising an electrochromic structure comprising at least one layer formed of an electrochromic material, the structure being bounded by two electrically conductive layers equipped with their current leads, the assembly comprising an electrical drive circuit comprising electrical connection means for connecting the electrically conductive layers of said at least two glazings to said circuit, an electricity generator to power the electrically conductive layers of the at least two electrochromic glazings under the instruction of a control unit equipped with a user interface, and utilizing a means for counting the time and means for measuring and computing physical characteristics of the circuit and of a glazing including at least one means for measuring the electrical voltage between two distinct points of the electrochromic structure of said glazing, a means for measuring the electric current and a means for measuring the state of coloration of said glazing, the assembly being able to execute the following steps:
ο initialization of the control unit using operational data which are characteristic of the glazings and of the circuit, including the two limits of the possible range of state of coloration,
ο activation of a coloration state modification drive command with the aid of the user interface,
ο recording of the drive command by the control unit,
ο initiation of a powering instruction from the control unit to the generator for a suitable response to the drive command, being an instruction dependent upon the initialized operational data and the measurements of physical characteristics, including the measurement or the reading of a stored measurement of the state of coloration of said glazing,
ο following of the modification of the state of coloration of said glazing by the control unit under the effect of the electrical powering at the terminals of said glazing by the generator and verification by the control unit, at a given frequency, of compliance with at least one safety criterion determined by the initialized data and/or the measurement of at least one physical characteristic of the circuit or of said glazing,
ο modification of the powering instruction by the control unit to the generator in the event of noncompliance with at least one safety criterion and possibly warning of the user,
ο halting of the powering instruction from the control unit to the generator, by intentional interruption of the drive command at the user interface or by reaching the coloration target fixed by the drive command, and return to situation awaiting drive command from the control unit.

24. Assembly according to Claim 23, in which the at least two electrochromic glazings are of laminated structure for exterior use, the at least two glazings including an exterior first sheet of glass (1), a layer (7) of mounting organic polymer filtering the ultraviolet rays, an intermediate second sheet (2) of glass and an interior third sheet (3) of glass, between which there are disposed the layers of the stack of the electrochromic system (8) including two electrically conductive layers which are edged and each equipped with a conductive screen-printed track (6, 10) connected to an external current lead (9).

25. Assembly according to Claim 24, **characterized in that** the second sheet (2) is of smaller size than the other two (1, 3), with setting in the peripheral groove thus delimited between the latter, of a seal or of a double seal (4, 5) flush with their edges or encapsulating them.

26. Assembly according to Claim 24 or 25, **characterized in that** they are designed to be mounted to be movable in relation to a fixed frame of the window frame type or vehicle body opening type without interruption of electrical connection to the drive circuit irrespective of their position in relation to said frame.

## Patentansprüche

1. Verfahren zur elektrischen Versorgung von mindestens zwei elektrosteuerbaren elektrochromen Verglasungen, um deren Färbungszustand abzuändern, **dadurch gekennzeichnet, dass** es einen elektrischen Steuerkreislauf vorsieht, umfassend elektrische Anschlussmittel zur Verbindung der elektroleitenden Verglasungschichten mit dem gesagten Kreislauf, wobei der Kreislauf zur elektrischen Versorgung von mindestens zwei elektrochromen Verglasungen angeordnet ist, einen Leistungsgenerator zur Versorgung der elektrochromen Verglasung unter der Regelung einer mit einer Benutzerschnittstelle ausgestatteten Kontrolleinheit, und benutzend einen Zeitabrechnungsteil sowohl als Messungs- und Berechnungsmittel der physikalischen Merkmale des Kreislaufs und einer Verglasung, davon mindestens einen Messungsteil der elektrischen Spannung zwischen zwei verschiedenen Punkten der elektrochromen Struktur der gesagten Verglasung, einen Messungsteil der elektrischen Dichte und einen Messungsteil des Färbungszustands der gesagten Verglasung, wobei das gesagte Verfahren die folgenden Schritte umfasst:
ο Initialisierung der Kontrolleinheit durch charakteristische Betriebsdaten der gesagten Verglasung und des Kreislaufs, davon beide Grenzen des möglichen Färbungszustandsbereichs,
ο Betätigung eines Befehls zur Abänderung des Färbungszustands unter Verwendung der Benutzerschnittstelle,
ο Aufnahme des Befehls durch die Kontrolleinheit,
ο Auslösung eines Versorgungssollwerts der Kontrolleinheit an den Generator, um eine dem Befehle angepasste Antwort zu erhalten, d.h. eines Sollwerts, das von den initialisierten Betriebsdaten und den Messungen der physikalischen Merkmale abhängt, wie das Messen und das Lesen einer gespeicherten Messung des Färbungszustands der gesagten Verglasung
ο Nachprüfung der Abänderung des Färbungszustands der gesagten Verglasung durch die Kontrolleinheit unter dem Effekt der elektrischen Versorgung an den Anschlussklemmen der gesagten Verglasung durch den Generator und Überprüfung durch die Kontrolleinheit, bei einer vorgegebenen Frequenz, der Einhaltung mindestens eines Sicherheitskriteriums, das durch die initialisierten Daten und/oder die Messung mindestens eines physikalischen Merkmals des Kreislaufs beziehungsweise der gesagten Verglasung ermittelt ist,
ο Abänderung des Versorgungssollwerts durch die Kontrolleinheit am Generator im Falle der Nicht-Einhaltung mindestens eines Sicherheitskriteriums, und eventuell Warnung an den Benutzer,
ο Aufhaltung des Versorgungssollwerts der Kontrolleinheit am Generator, durch freiwillige Unterbrechung des Befehls an der Benutzerschnittstelle oder durch Erreichung des durch den Befehl gesetzten Färbungsziels, und Zurücksetzung der Kontrolleinheit auf den Befehlswartezustand.

2. Verfahren zur elektrischen Versorgung nach Anspruch 1, **dadurch gekennzeichnet, dass** die Abänderung des Versorgungssollwerts der Kontrolleinheit im Falle der Nicht-Einhaltung eines der Sicherheitskriterien darin besteht, dass die Kontrolleinheit die Öffnung des elektrischen Kreislaufs steuert.

3. Verfahren zur elektrischen Versorgung nach einem der vorherigen Ansprüche, **dadurch gekennzeichnet, dass** die Anhaltung des Versorgungssollwerts der Kontrolleinheit durch die Erreichung des dem Befehle gesetzten Färbungsziels bei der Erreichung eines initialisierten Minimalwerts durch die im Kreislaufe umlaufende gemessene elektrische Dichte erfolgt, insbesondere ausgewählt im Absolutwert zwischen 0,1 und 10 mA, oder sobald der bemessene Färbungszustand der gesagten Verglasung eine der beiden Grenzen des ebenfalls initialisierten möglichen Färbungszustandsbereichs erreicht.

4. Verfahren zur elektrischen Versorgung nach einem der vorherigen Ansprüche, **dadurch gekennzeichnet, dass** die Nachprüfung des Färbungszustands der gesagten Verglasungdurch Messungen ihres Ladezustands durch einen Messungsteil des Ladezustands Q der gesagten Verglasung erfolgt, wie einen Stromintegrator, z.B. einen Coulometer.

5. Verfahren zur elektrischen Versorgung nach Anspruch 4, **dadurch gekennzeichnet, dass** die beiden initialisierten Grenzen des möglichen Färbungszustandsbereichs Q_{(d)} = O im abgefärbtesten Zustand und Q_{(c)} im gefärbtesten Zustand sind.

6. Verfahren zur elektrischen Versorgung nach einem der vorherigen Ansprüche, **dadurch gekennzeichnet, dass** die Nachprüfung des Färbungszustands der gesagten Verglasung durch Messungen der Lichtübertragung TL der gesagten Verglasung erfolgt, unter Verwendung eines an der gesagten Verglasung befestigten, angepassten Sensors, mit insbesondere als zwei Grenzen 24 des möglichen Färbungszustandsbereichs T_{L(d)}= 50% im abgefärbten Zustand und T_{Ucc)}=5% im gefärbten Zustand.

7. Verfahren zur elektrischen Versorgung gemäß einem der Ansprüche 1 bis 3, **dadurch gekennzeichnet, dass** die Nachprüfung des Färbungszustands der gesagten Verglasung durch Messungen der Potentialaufgabe mittels einer Vorrichtung wie eines Voltmeters erfolgt.

8. Verfahren zur elektrischen Versorgung nach einem der vorherigen Ansprüche, **dadurch gekennzeichnet, dass** die mindestens zwei elektrochromen Verglasungen parallel gelagert, wenn der Generator ein Spannungsgenerator ist, beziehungsweise hintereinander angebracht sind, wenn der Generator ein Dichtegenerator ist

9. Verfahren zur elektrischen Versorgung nach einem der vorherigen Ansprüche, **dadurch gekennzeichnet, dass** es auch einen automatischen Auslösungsschritt enthält, mittels der zeitgeberartigen Zeitabrechnungsteils, eines Versorgungssollwerts der Kontrolleinheit an den Generator zur Abfärbung der Verglasung, wenn dieser in einem maximalen beziehungsweise dazwischenliegenden Färbungszustand während einer Zeitdauer beibehalten wurde, die mindestens gleich einer bestimmten, initialisierten Wert ist, insbesondere während einer Zeitdauer zwischen 1 und 24 Stunden, beziehungsweise bei einer initialisierten vorgegebenen Frequenz, oder noch bei einer initialisierten festen Uhrzeit.

10. Verfahren zur elektrischen Versorgung nach einem der vorherigen Ansprüche, **dadurch gekennzeichnet, dass** die Betätigung des Befehls zur Abänderung des Färbungszustands manuell und/oder durch automatisierte Regelung erfolgt, wobei die gesagte Regelung der Messung der Beleuchtungsstärke beziehungsweise des Sonnenflusses mittels angemessener Sensoren zugeordnet ist.

11. Verfahren zur elektrischen Versorgung nach einem der vorherigen Ansprüche, **dadurch gekennzeichnet, dass** eines der Sicherheitskriterien vorsieht, dass die durch einen Amperemeter gemessene elektrische Dichte an den Anschlussklemmen des Generators und/oder der gesagten Verglasung ungleich Null sein soll.

12. Versorgungsverfahren nach einem der vorherigen Ansprüche, **dadurch gekennzeichnet, dass** ein Sicherheitskriterium vorsieht, dass die gemessene Temperatur, wenn der Generator eine Spannung an die Anschlussklemmen der Verglasung abgibt, innerhalb eines initialisierten Temperaturbereichs, insbesondere von ca. -20°C bis +80°C bleibt.

13. Versorgungsverfahren nach einem der vorherigen Ansprüche, **dadurch gekennzeichnet, dass** die Temperatur der Verglasung entweder unmittelbar durche einen Sensor wie ein Thermoelement, das daran befestigt oder in der Nähe davon gesetzt wurde, oder mittelbar unter Verwendung eines durch den Generator gelieferten elektrischen Pulses bemessen wird.

14. Verfahren zur elektrischen Versorgung nach einem der vorherigen Ansprüche, **dadurch gekennzeichnet, dass** der Generator ein Spannungsgenerator ist, der unter Einhaltung des von der Kontrolleinheit empfangenen Versorgungssollwerts eine derartige Spannung U(g) liefern kann, sodass die zwischen zwei verschiedenen Punkten der elektrochromen Struktur der gesagten Verglasung gemessene Spannung U(v) einem Spannungssollwert U(c) gleich ist, dessen Profil vom betätigten Befehl und der Temperature abhängt.

15. Versorgungsverfahren nach Anspruch 14, **dadurch gekennzeichnet, dass** ein Sicherheitskriterium in der Überprufung besteht, wenn der Generator eine Spannung an die Anschlussklemmen der Verglasung abgibt, ob der Unterschied in Absolutwerten U(c)-U(v) weniger oder gleich einem vorgegebenen initialisierten Spannungswert, insbesondere von ca. 25 mV bleibt.

16. Versorgungsverfahren nach einem der Ansprüche 14 oder 15, **dadurch gekennzeichnet, dass** ein Sicherheitskriterium in der Messung der Temperatur, dann in der Berechnung, wenn der Generator eine Spannung an die Anschlussklemmen der gesagten Verglasung abgibt, der zeitbezüglichen Ableitung der Temperatur besteht, zur Überprüfung, dass die gesagte Ableitung weniger oder gleich einem vorgegebenen initialisierten Wert, insbesondere von ca. 1 K/s bleibt.

17. Versorgungsverfahren nach einem der Ansprüche 14 bis 16, **dadurch gekennzeichnet, dass** ein Sicherheitskriterium in der Überprufung besteht, wenn der Generator eine Spannung an die Anschlussklemmen der gesagten Verglasung abgibt, ob der Unterschied im Absolutwert [U(g) - U(c)] dem Produkt der an den Anschlussklemmen des Generatore gemessenen Dichte i mit einer einem initialisierten Widerstande gleichwertigen Größe r weniger oder gleich ist.

18. Versorgungsverfahren nach einem der Ansprüche 1 bis 13, **dadurch gekennzeichnet, dass** der Generator ein Dichtegenerator ist, der unter Einhaltung des von der Kontrolleinheit empfangenen Versorgungssollwerts, eine Dichte mit einem dem betätigten Befehle angepassten Profil liefern kann.

19. Versorgungsverfahren nach Anspruch 18, **dadurch gekennzeichnet, dass** ein Sicherheitskriterium darin besteht, wenigstens wenn der Befehl zur Färbungsabänderung eine Abfärbung ist, dass die Kontrolleinheit eine Verminderung der durch den Generator gelieferten Dichte, insbesondere mit einen Faktor 2 verursacht, wenn die zweite zeitbezügliche Ableitung der zwischen zwei verschiedenen Punkten der elektrochromen Struktur der gesagten Verglasung gemessenen Spannung eine initialisierte Schwellengrösse erreicht, insbesondere nah 0,5 mV/s² im Absolutwert.

20. Versorgungsverfahren nach Anspruch 18 oder 19, **dadurch gekennzeichnet, dass** ein Sicherheitskriterium darin besteht, dass der Unterschied im Absolutwert zwischen der Solldichte und der tatsächlich gemessenen Dichte weniger oder gleich einer initialiserten Grösse, insbesondere von ca. 0,1 mA bleibt.

21. Verwendung des Steuerverfahrens nach einem der vorherigen Ansprüche zur Steuerung von elektrochromen Verglasungen zur Ausstattung von Fahrzeugen, insbesondere von seitlichen Verglasungen, hinteren Verglasungen und Verglasungen für Auto-Schiebedächern.

22. Verwendung des Steuerverfahrens nach einem der vorherigen Ansprüche zur Steuerung von elektrochromen Verglasungen zur Ausstattung von Gebäuden, wie Innen-oder Aussenverglasungen.

23. Aufbau umfassend mindestens zwei elektrochrome Verglasungen, aufweisend eine elektrochrome Struktur, die wenigstens eine aus einem elektrochromen Materiale ausgebildete Schicht umfasst, wobei die Struktur durch zwei mit ihren Stromzuführungen elektroleitende Schichten begrenzt ist, wobei der Aufbau einen elektrischen Steuerkreislauf umfasst, der zur Verbindung der elektroleitenden Verglasungschichten der wenigstens gesagten beiden Verglasungen mit dem gesagten Kreislauf elektrische Anschlussmittel enthält, einen Leistungsgenerator zur Versorgung der elektrochromen Schichten der wenigstens beiden elektrochromen Verglasungen unter der Kontrolle einer mit einer Benutzerschnittstelle ausgestatteten Kontrolleinheit, und benutzend einen Zeitabrechnungsteil sowohl Messungs- und Berechnungsmittel der physikalischen Merkmale des Kreislaufs und der gesagten Verglasung, davon mindestens einen Messungsteil der elektrischen Spannung zwischen zwei verschiedenen Punkten der elektrochromen Struktur der gesagten Verglasung, einen Messungsteil der elektrischen Dichte und einen Messungsteil des Färbungszustands der gesagten Verglasung, wobei der Aufbau zur Ausführung der folgenden Schritte fähig ist:
ο Initialisierung der Kontrolleinheit durch charakteristische Betriebsdaten der gesagten Verglasungen und des Kreislaufs, davon beide Grenzen des möglichen Färbungszustandsbereichs,
ο Betätigung einer Steuerung zur Abänderung des Färbungszustands unter Verwendung der Benutzerschnittstelle,
ο Aufnahme des Befehls durch die Kontrolleinheit,
ο Auslösung eines Versorgungssollwerts der Kontrolleinheit an den Generator, um eine dem Befehle angepasste Antwort zu erhalten, d.h. eines Sollwerts, das von den initialisierten Betriebsdaten und den Messungen der physikalischen Merkmale abhängt, wie das Messen und das Lesen einer gespeicherten Messung des Färbungszustands der gesagten Verglasung,
ο Nachprüfung der Abänderung des Färbungszustands der gesagten Verglasung durch die Kontrolleinheit unter dem Effekt der elektrischen Versorgung an den Anschlussklemmen der gesagten Verglasung durch den Generator und Überprüfung durch die Kontrolleinheit, bei einer vorgegebenen Frequenz, der Einhaltung mindestens eines Sicherheitskriteriums, das durch die initialisierten Daten und/oder die Messung mindestens eines physikalischen Merkmals des Kreislaufs beziehungsweise der gesagten Verglasung ermittelt ist,
ο Abänderung des Versorgungssollwerts durch die Kontrolleinheit am Generator im Falle der Nicht-Einhaltung mindestens eines Sicherheitskriteriums, und eventuell Warnung an den Benutzer,
ο Aufhaltung des Versorgungssollwerts der Kontroll am Generator, durch freiwillige Unterbrechung des Befehls an der Benutzerschnittstelle oder durch Erreichung des durch den Befehl gesetzten Färbungsziels, und Zurücksetzung der Kontrolleinheit auf den Befehlswartezustand.

24. Aufbau nach Anspruch 23, wobei die wenigstens zwei elektrochromen Verglasungen eine Verbundstruktur für äussere Anwendung aufweisen, die wenigstens zwei Verglasungen umfassend ein erstes äusseres Glasband (1), eine organische Polymerschicht (7) des Zusammenbaus zur Ausfilterung der Ultraviolettstrahlen, ein zweites dazwischenliegendes Glasband (2) und ein drittes inneres Glasband (3), zwischen denen die Stapelschichten des elektrochromen Systems (8) angeordnet sind, davon zwei elektroleitende Schichten, die angelegt und jeweils mit einer an eine äussere Stromzuführung (9) verbundenen leitenden Siebdruckbahn (6, 10) ausgestattet sind.

25. Aufbau nach Anspruch 24, **dadurch gekennzeichnet, dass** die Grösse des zweiten Bandes (2) kleiner als die der zwei anderen (1, 3) ist, wobei in der zwischen diesen beiden Bändern so begrenzten Umfangsnut eine die Kanten dieser glatt abschliessende oder einkapselnde Dichtung beziehungsweise Doppeldichtung (4, 5) vorgesehen ist.

26. Aufbau nach Anspruch 23 oder 25, **dadurch gekennzeichnet,dass** sie zur beweglich gelagerten Montage in Bezug auf ein festes Gestell, wie einen Fensterrahmen oder eine Fahrzeug-Karosserieöffnung ausgebildet sind, wobei der elektrische Anschluss mit dem Steuerkreislaufe unterbrechungslos erfolgt, und zwar unabhängig von ihrer Stellung im Verhältnis zum gesagten Gestell.
